# FASCICULE DE BREVET EUROPEEN

(11) **EP 1 195 278 B1**
(45) Date de publication et mention de la délivrance du brevet: **23.01.2008**
(21) Numéro de dépôt: 01402491.3
(22) Date de dépôt: 27.09.2001
(51) Int. Cl.: B60H 3/06, F24F 13/28

(54) **Dispositif de filtration destiné à équiper un appareil d'aération et/ou de chauffage et/ou de climatisation, notamment pour véhicule automobile et utilisation d'un tel dispositif de filtration**
Filtervorrichtung für ein Gerät zur Belüftung und/oder zur Beheizung und/oder zur Klimatisierung, insbesondere für ein Kraftfahrzeug und Verwendung solch einer Filtervorrichtung
Filtration device for an apparatus for ventilating and/or heating and/or air conditioning, especially for a motor vehicle and the use of such a filtration device

(30) Priorité: 03.10.2000 FR 0012615
(43) Date de publication de la demande: 10.04.2002
(73) Titulaire: Valeo Matériaux de Friction, 87020 Limoges cedex 9 (FR)
(72) Inventeur: DeWitte, Jean-Marc, 61100 Flers (FR)
(74) Mandataire: Lemaire, Marc

(56) Documents cités:
- EP-A- 0 380 026
- EP-A- 0 442 834
- DE-A- 4 004 343

## Description

La présente invention a pour objet un dispositif de filtration destiné à équiper un appareil d'aération et/ou de chauffage et/ou climatisation, notamment pour véhicule automobile.

Un dispositif de filtration selon le préamble de la revendication 1 est par exemple connu du document DE-A-40 04 343.

Le but de l'invention est de proposer un dispositif de filtration susceptible d'être déformé lors de son insertion dans un appareil, pour tenir compte d'une forme non plane de son logement dans l'appareil.

Un dispositif de filtration comporte généralement un cadre entourant au moins partiellement un média filtrant ; ce cadre comprend en principe deux éléments longitudinaux, tels que parois, entre lesquels s'étend le média filtrant en leur étant fixés, par exemple par surmoulage ou par soudage. Pour soutenir le média filtrant généralement souple, le cadre est prévu rigide et lorsque le logement de l'appareil n'est pas plan, il n'est pas toujours aisé d'y placer le dispositif de filtration.

Pour tenir compte de la forme non plane du logement de l'appareil, on a proposé de réaliser les éléments longitudinaux en plusieurs parties ; celles-ci étant assemblées par le média filtrant, de constitution souple, lesdites parties se trouvent être en quelque sorte montées à articulation l'une par rapport à l'autre autour d'une charnière constituée par le média filtrant ; il est ainsi facile d'insérer le dispositif de filtration dans son logement.

Une telle disposition donne donc en utilisation entière satisfaction.

Elle présente par ailleurs l'inconvénient que le dispositif de filtration n'a pas en lui-même un maintien suffisant permettant ses manipulations, notamment lors de sa fabrication, à l'occasion de contrôles divers ou autres opérations, telles que l'emballage par exemple.

La présente invention a pour but de pallier cet inconvénient.

Selon l'invention, un dispositif de filtration destiné à équiper un appareil d'aération et/ou de chauffage et/ou de climatisation, notamment pour véhicule automobile, comportant un cadre rigide entourant au moins partiellement un média filtrant, ledit cadre comprenant au moins deux éléments longitudinaux entre lesquels s'étend le média filtrant en leur étant fixé, chacun des éléments longitudinaux étant en au moins deux parties, est caractérisé par le fait que deux parties d'un même élément longitudinal sont en outre reliées par un pont sécable destiné à casser lors de la première utilisation du dispositif.

Avantageusement, chaque élément est en au moins trois parties et les ponts sécables sont disposés en diagonales, c'est-à-dire que les ponts sécables correspondant à un élément longitudinal sont décalés longitudinalement par rapport aux ponts sécables correspondant à l'autre élément longitudinal, en sorte que les ponts cassent de manière certaine.

De préférence, dans une même section transversale les deux parties sont reliées d'un côté par un pont sécable supérieur et de l'autre côté par un pont sécable inférieur.

Avantageusement, les deux parties présentent, au droit du pont sécable, à distance de celui-ci, des moyens d'arc-boutement complémentaires.

Avantageusement, le média filtrant comprend un mat de non tissé constitué d'un voile de carde.

De préférence, le voile de carde forme une nappe unique.

De préférence, le mat de non tissé est à base de fibres longues dont la longueur est, de préférence, au moins égale à 38 mm.

Avantageusement, lesdites fibres longues présentent un diamètre moyen égal ou supérieur à 10 µm.

De préférence, lesdites fibres longues sont en matériau thermoplastique.

Avantageusement, lesdites fibres longues sont des fibres de polypropylène.

Avantageusement, le média filtrant est plissé.

De préférence, le cadre est en matière plastique ; la matière plastique du cadre est de l'Acrylonitrile Butadiène Styrène.

Le dispositif de filtration selon l'invention se présente ainsi avantageusement sous la forme d'une cassette susceptible d'être déformée dans tous les sens lors de son insertion dans un appareil d'aération et/ou de chauffage et/ou de climatisation, ce qui facilite considérablement les opérations correspondantes, notamment lorsque l'accessibilité au logement du dispositif de filtration n'est pas aisée.

Grâce à la constitution du dispositif de filtration selon l'invention, celui-ci présente en outre un certain maintien facilitant ses manipulations.

La présente invention a également pour objet l'utilisation d'un dispositif de filtration tel que ci-dessus destiné à équiper un appareil d'aération et/ou de chauffage et/ou de climatisation, notamment pour véhicule automobile, laquelle utilisation consiste à casser le (ou les) pont(s) sécable(s) en mettant en place ledit dispositif dans son logement prévu dans l'appareil, lequel logement est non plan.

D'autres caractéristiques et avantages de l'invention apparaîtront dans la description ci-après d'un exemple de réalisation, en référence aux dessins annexés dans lesquels :
- la figure 1 est une vue schématique en perspective d'un dispositif de filtration selon l'invention ;
- les figures 2 et 3 sont des vues agrandies des loupes II et III de la figure 1 ;
- la figure 4 est une vue analogue à la figure 2 et montre une variante.

Le dispositif de filtration 10 comporte un média filtrant 11 formant filtre à particules, formé d'un mat de non tissé constitué d'un voile de carde en une nappe unique. Le média filtrant 11 est ici plissé.

Ledit mat de non tissé est à base de fibres longues dont la longueur est, de préférence, au moins égale à 38 mm. Lesdites fibres longues présentent un diamètre moyen égal ou supérieur à 10 µm. Lesdites fibres sont en matériau thermoplastique et, en pratique, en polypropylène.

Le mat de non tissé peut être associé à une grille par exemple en polypropylène. Celle-ci se trouve placée en aval par rapport au sens de circulation de l'air dans le dispositif de filtration 10.

Le média filtrant 11 peut être associé à deux grilles, plissées également.

Cette ou ces grilles sont solidarisées ou non au mat de non tissé ; lorsqu'elles sont solidarisées audit mat, cette solidarisation, qui peut n'être que partielle, est obtenue par exemple par soudage aux ultrasons, par collage, par consolidation mécanique, notamment au jet d'eau, ou autre.

Le dispositif de filtration 10 peut constituer un filtre à particules, ou un filtre dit combiné, c'est-à-dire à la fois un filtre à particules et un filtre arrêtant des gaz délétères. Dans ce cas, sont ajoutés des moyens d'adsorption de gaz.

Lesdits moyens d'adsorption de gaz peuvent comporter un lit de charbon activé, ou un tissu de carbone souple plissé de la même manière.

Un cadre 12 est prévu pour supporter les différents constituants du dispositif de filtration. Le cadre est ici en matière plastique sécable.

Le cadre 12 comprend deux éléments longitudinaux ou parois latérales 13, 14 recouvrant, par surmoulage, les bords longitudinaux du média filtrant 11, ici les extrémités en forme de V des plis du média filtrant 11 plissé.

Dans l'exemple représenté, les parois latérales 13, 14 sont constituées chacune de trois parties 13A, 13B, 13C, 14A, 14B, 14C séparées par un intervalle 15 au droit duquel le média filtrant 11 réalise une charnière souple 16 permettant aux trois éléments de filtre ainsi réalisés d'être articulés l'un par rapport à l'autre autour desdites charnières 16.

La déformation du dispositif de filtration 10 est permise par celle naturelle du média filtrant 11 souple et par celle du cadre 12, notamment de ses parois latérales 13, 14 capables de se déformer dans leur plan grâce à leur constitution en trois parties.

Grâce à la constitution ainsi décrite du filtre, celui-ci présente des caractéristiques intéressantes de souplesse qui permettent de le courber afin d'introduire plus facilement le filtre dans un appareil de chauffage et/ou ventilation et/ou climatisation de véhicule automobile. Ceci est particulièrement avantageux lorsque, comme c'est très souvent le cas, l'accessibilité au logement du filtre est difficile.

Pour obtenir un tel dispositif de filtration 10 à éléments de filtres séparés, et pour assurer son propre maintien avant utilisation, la présente invention prévoit de partir d'un dispositif de filtration 10 dans lequel les parties d'éléments longitudinaux des éléments de filtre sont reliées par un pont sécable destiné à casser lors de la première utilisation.

Bien entendu, la mise en place du dispositif de filtration sera d'autant plus aisée que les ponts cassent sûrement, soit au fur et à mesure de son introduction, soit avant son introduction par pliage préalable.

Ces ponts sont par définition plus fins que les parties des parois latérales du cadre. Plus précisément dans les figures illustrées les ponts sont de hauteur inférieure à celle des parties des parois latérales 13, 14.

Pour ce faire, lesdits ponts 17 sont judicieusement placés en sorte de mettre à profit non seulement la rotation des parties adjacentes autour des charnières 16 mais également une certaine torsion entre elles.

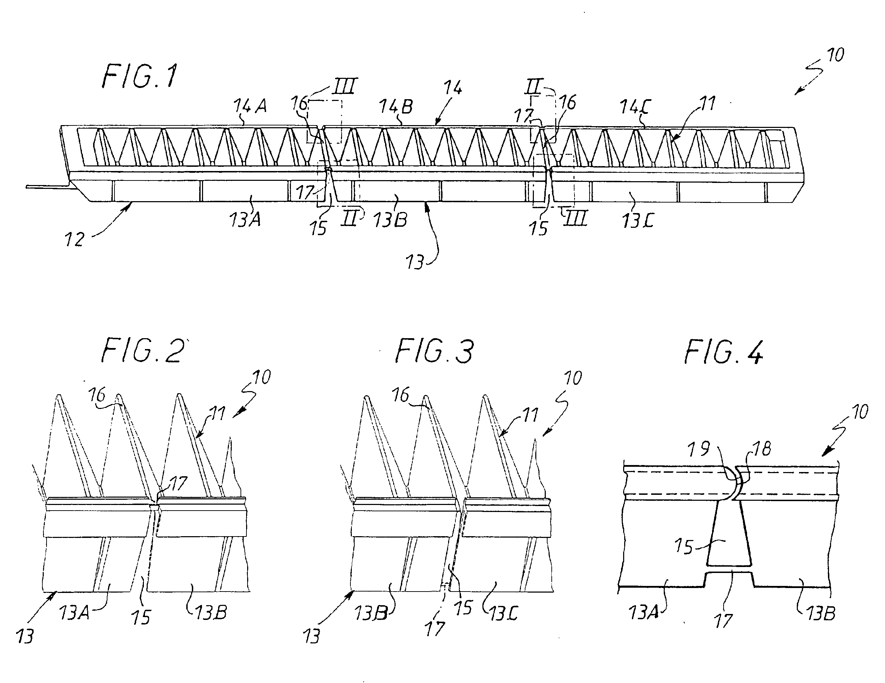

Ainsi, dans un plan transversal, perpendiculaire aux parois 13 et 14, les ponts sécables sont disposés en diagonale, c'est-à-dire qu'ils sont décalés longitudinalement : sur la figure 1, les bulles II montrent la présence d'un pont sécable 17, et les bulles III, transversalement en face des bulles II, montrent l'absence d'un tel pont ; ceci signifie que, par exemple, s'agissant des deux éléments de filtre comprenant, d'un côté les parties 13A, 13B et de l'autre côté les parties 14A et 14B, seules les parties 13A et 13B sont reliées par un pont sécable ; de même, les parties 14B et 14C sont reliées par un pont sécable 17 et les parties 13B et 13C ne le sont pas.

On pourrait également relier les parties ci-dessus qui ne le sont pas, mais dans ce cas, d'un côté le pont est à un niveau dit supérieur et de l'autre à un niveau inférieur, et ce dans une même section transversale : ainsi, alors que les parties 14B et 14C sont reliées par un pont 17 au niveau supérieur, par rapport à la figure, les parties 13B et 13C pourraient être reliées par un pont 17 au niveau inférieur, comme montré en traits mixtes sur la figure 3.

On pourrait également prévoir, du côté où se situe un pont sécable, et à distance de celui-ci, des moyens d'arc-boutement complémentaires 18, 19 portés respectivement par deux parties adjacentes, telles que 13A et 13B comme illustré sur la figure 4 ; ainsi, dès le début de la déformation relative des parties 13A et 13B, tout l'effort dû à cette déformation est immédiatement concentré sur le pont 17, qui casse alors de manière certaine.

De très bons résultats ont été obtenus en réalisant un cadre 12 en Acrylonitrile Butadiène Styrène.

La réalisation du mat de non tissé peut être effectuée comme suit.

Des fibres de polypropylène d'une finesse de 1,7 dtex (diamètre 14µm) coupées à une longueur de 40 mm sont introduites dans un mélangeur.

Le mélange de fibres obtenu est ensuite introduit dans une démoteuse puis dans un silo de stockage avant d'être cardé au moyen d'une carde de type laine à double peigneur équipée d'un brouilleur de type pêle-mêle afin d'obtenir un voile de carde isotrope.

Le voile est, en sortie de carde, introduit dans un condenseur pour former une nappe.

Les paramètres de la carde et du condenseur sont choisis de manière à obtenir une nappe présentant une masse surfacique d'environ 20 à environ 150g/m².

La nappe est déposée sur un tapis puis consolidée par une opération de liage hydraulique.

L'opération de liage hydraulique consiste à faire traverser la nappe disposée sur un tambour rotatif par des jets d'eau très fins sous haute pression (40 à 200 bars).

En rebondissant sur le tambour, les jets d'eau provoquent un nouage des fibres conférant à la nappe une résistance mecanique importante sans pour autant en augmenter, de manière conséquente, la densité.

Après passage dans un tunnel de séchage, la nappe est enroulée.

La nappe est ensuite reprise pour subir une opération de plissage.

L'invention s'applique également au cas où le média filtrant 11 dépasse latéralement du cadre 12 en sorte que celui-ci est légèrement en retrait par rapport à l'extrémité du média filtrant 11, comme décrit dans la demande de brevet français déposée le 28 Juillet 2000 sous le numéro 00 09 982.

Bien entendu, comme connu en soi, un joint d'étanchéité peut être associé aux éléments longitudinaux 13, 14.

On notera qu'ici le cadre a une forme globalement rectangulaire. Bien entendu ce cadre peut ne comporter que les deux parois latérales 13,14.

Dans tous les cas le dispositif de filtration est manipulable et transportable avant son montage dans le logement de l'appareil. Ce dispositif s'insère de manière aisée dans le dit logement grâce au ponts sécables en sorte qu'après cassure des ponts les parties des parois latérales sont montées à articulation autour de charnières constituées par le média filtrant. De préférence on casse volontairement au moins une partie des ponts juste avant le montage du dispositif de filtration dans son logement.

L'invention permet de standardiser le dispositif de filtration, qui peut se monter dans un logement plan sans cassure des ponts, dont la hauteur dépend des applications.

## Revendications

1. Dispositif de filtration (10) destiné à équiper un appareil d'aération et/ou de chauffage et/ou de climatisation, notamment pour véhicule automobile, comportant un cadre (12) rigide entourant au moins partiellement un média filtrant (11), ledit cadre (12) comprenant au moins deux éléments longitudinaux (13, 14) entre lesquels s'étend le média filtrant (11) en leur étant fixé, chacun des éléments longitudinaux (13, 14) étant en au moins deux parties (13A, 13B, 13C, 14A, 14B, 14C), **caractérisé par le fait que** deux parties (13A, 13B, 13C, 14A, 14B, 14C) d'un même élément longitudinal (13, 14) sont en outre reliées par un pont sécable (17) qui casse lors de la première utilisation du dispositif (10).

2. Dispositif de filtration (10) selon la revendication 1, **caractérisé par le fait que** chaque élément longitudinal (13, 14) est en au moins trois parties (13A, 13B, 13C, 14A, 14B, 14C) et les ponts sécables (17) sont disposés en diagonales, c'est-à-dire que les ponts sécables (17) correspondant à un élément longitudinal (13, 14) sont décalés longitudinalement par rapport aux ponts sécables (17) correspondant à l'autre élément longitudinal (14, 13).

3. Dispositif de filtration (10) selon la revendication 1, **caractérisé par le fait que** dans une même section transversale les deux parties sont reliées d'un côté par un pont sécable supérieur et de l'autre côté par un pont sécable inférieur.

4. Dispositif de filtration (10) selon l'une des revendications 1 à 3, **caractérisé par le fait que** les deux parties d'un desdits éléments longitudinaux (13, 14) présentent, au droit du pont sécable (17), à distance de celui-ci, des moyens d'arc-boutement complémentaires (18, 19).

5. Dispositif de filtration (10) selon l'une des revendications 1 à 4, **caractérisé par le fait que** le média filtrant (11) comprend un mat de non tissé (24) constitué d'un voile de carde.

6. Dispositif de filtration (10) selon la revendication 5, **caractérisé par le fait que** le voile de carde (24) forme une nappe unique.

7. Dispositif de filtration (10) selon l'une des revendications 5 ou 6, **caractérisé par le fait que** le mat de non tissé (24) est à base de fibres longues dont la longueur est, de préférence, au moins égale à 38 mm.

8. Dispositif de filtration (10) selon la revendication 7, **caractérisé par le fait que** lesdites fibres longues présentent un diamètre moyen égal ou supérieur à 10 µm.

9. Dispositif de filtration (10) selon l'une des revendications 7 ou 8, **caractérisé par le fait que** lesdites fibres longues sont en matériau thermoplastique.

10. Dispositif de filtration selon la revendication 9, **caractérisé par le fait que** lesdites fibres longues sont des fibres de polypropylène.

11. Dispositif de filtration (10) selon l'une des revendications 1 à 10, **caractérisé par le fait que** le média filtrant (11) est plissé.

12. Dispositif de filtration (10) selon l'une des revendications 1 à 11, **caractérisé par le fait que** le cadre (12) est en matière plastique.

13. Dispositif de filtration (10) selon la revendication 12, **caractérisé par le fait que** la matière plastique du cadre (12) est de l'Acrylonitrile Butadiène Styrène.

14. Utilisation du dispositif de filtration (10) selon l'une des revendications 1 à 13, laquelle consiste à casser le / les dit(s) pont(s) sécable(s) (17) en mettant en place ledit dispositif (10) dans son logement prévu dans l'appareil, lequel logement est non plan.

## Claims

1. Filtering device (10) which is designed to equip a unit for ventilation and/or heating and/or air conditioning, in particular for a motor vehicle, comprising a rigid frame (12) which surrounds at least partially a filtering medium (11), the said frame (12) comprising at least two longitudinal elements (13, 14), between which the filtering medium (11) extends whilst being secured to the elements, each of the longitudinal elements (13, 14) being in at least two parts (13A, 13B, 13C, 14A, 14B, 14C), **characterised in that** two parts (13A, 13B, 13C, 14A, 14B, 14C) of a single longitudinal element (13, 14) are also connected by means of a divisible bridge (17) which breaks when the device (10) is first used.

2. Filtering device (10) according to claim 1, **characterised in that** each longitudinal element (13, 14) is in at least three parts (13A, 13B, 13C, 14A, 14B, 14C), and the divisible bridges (17) are disposed diagonally, i.e. the divisible bridges (17) which correspond to one longitudinal element (13, 14) are offset longitudinally relative to the divisible bridges (17) which correspond to the other longitudinal element (14, 13).

3. Filtering device (10) according to claim 1, **characterised in that**, in a single transverse section , the two parts are connected on one side by an upper divisible bridge, and on the other side by a lower divisible bridge.

4. Filtering device (10) according to one of claims 1 to 3, **characterised in that** the two parts of one of the said longitudinal elements (13, 14) have additional staying means (18, 19) at right-angles to the divisible bridge (17), and spaced from the latter.

5. Filtering device (10) according to any one of claims 1 to 4, **characterised in that** the filtering medium (11) comprises a non-woven mat (24) constituted by a sheet of card.

6. Filtering device (10) according to claim 5, **characterised in that** the sheet of card (24) forms a single lap.

7. Filtering device (10) according to claim 5 or claim 6, **characterised in that** the non-woven mat (24) is based on long fibres, the length of which is preferably at least 38 mm.

8. Filtering device (10) according to claim 7, **characterised in that** the said long fibres have an average diameter of 10 µm or more.

9. Filtering device (10) according to claim 7 or claim 8, **characterised in that** the said long fibres are made of thermoplastic material.

10. Filtering device (10) according to claim 9, **characterised in that** the said long fibres are polypropylene fibres.

11. Filtering device (10) according to one of claims 1 to 10, **characterised in that** the filtering medium (11) is pleated.

12. Filtering device (10) according to one of claims 1 to 11, **characterised in that** the frame (12) is made of plastic material.

13. Filtering device (10) according to claim 12, **characterised in that** the plastic material of the frame (12) is acrylonitrile butadiene styrene.

14. Use of the filtering device (10) according to one of claims 1 to 13, which consists of breaking the said divisible bridge(s) (17) by putting the said device (10) into place in its receptacle provided in the unit, which receptacle is non-flat.

## Patentansprüche

1. Filtervorrichtung (10) zur Ausrüstung einer Belüftungs-, und/oder Heizungs- und/oder Klimaanlage, insbesondere für Kraftfahrzeuge, mit einem starren Rahmen (12), der wenigstens teilweise ein Filtermedium (11) umgibt, wobei der besagte Rahmen (12) wenigstens zwei Längselemente (13, 14) umfasst, zwischen denen sich das Filtermedium (11) erstreckt, indem es daran befestigt ist, wobei jedes der Längselemente (13, 14) aus wenigstens zwei Teilen (13A, 13B, 13C, 14A, 14B, 14C) besteht, **dadurch gekennzeichnet, dass** zwei Teile (13A, 13B, 13C, 14A, 14B, 14C) ein und desselben Längselements (13, 14) außerdem durch einen durchtrennbaren Steg (17) verbunden sind, der bei der ersten Benutzung der Vorrichtung (10) abbricht.

2. Filtervorrichtung (10) nach Anspruch 1, **dadurch gekennzeichnet, dass** jedes Längselement (13, 14) aus wenigstens drei Teilen (13A, 13B, 13C, 14A, 14B, 14C) besteht und die durchtrennbaren Stege (17) in Diagonalen angeordnet sind, das heißt, dass die einem Längselement (13, 14) entsprechenden durchtrennbaren Stege (17) im Verhältnis zu den dem anderen Längselement (14, 13) entsprechenden durchtrennbaren Stegen (17) in Längsrichtung versetzt sind.

3. Filtervorrichtung (10) nach Anspruch 1, **dadurch gekennzeichnet, dass** in einem gleichen Querschnitt die zwei Teile auf einer Seite durch einen oberen durchtrennbaren Steg und auf der anderen Seite durch einen unteren durchtrennbaren Steg verbunden sind.

4. Filtervorrichtung (10) nach einem der Ansprüche 1 bis 3, **dadurch gekennzeichnet, dass** die zwei Teile eines der besagten Längselemente (13, 14) in Höhe des durchtrennbaren Stegs (17), in einem Abstand zu diesem, komplementäre Abstützmittel (18, 19) aufweisen.

5. Filtervorrichtung (10) nach einem der Ansprüche 1 bis 4, **dadurch gekennzeichnet, dass** das Filtermedium (11) eine Vliesmatte (24) umfasst, die aus einem Krempelvlies besteht.

6. Filtervorrichtung (10) nach Anspruch 5, **dadurch gekennzeichnet, dass** das Krempelvlies (24) eine einzige Lage bildet.

7. Filtervorrichtung (10) nach einem der Ansprüche 5 oder 6, **dadurch gekennzeichnet, dass** die Vliesmatte (24) auf der Basis von Langfasern ausgeführt ist, deren Länge vorzugsweise mindestens gleich 38 mm ist.

8. Filtervorrichtung (10) nach Anspruch 7, **dadurch gekennzeichnet, dass** die besagten Langfasern einen mittleren Durchmesser größer oder gleich 10 µm aufweisen.

9. Filtervorrichtung (10) nach einem der Ansprüche 7 oder 8, **dadurch gekennzeichnet, dass** die besagten Langfasern aus Thermoplast bestehen.

10. Filtervorrichtung (10) nach Anspruch 9, **dadurch gekennzeichnet, dass** es sich bei den besagten Langfasern um Polypropylenfasern handelt.

11. Filtervorrichtung (10) nach einem der Ansprüche 1 bis 10, **dadurch gekennzeichnet, dass** das Filtermedium (11) gefaltet ist.

12. Filtervorrichtung (10) nach einem der Ansprüche 1 bis 11, **dadurch gekennzeichnet, dass** der Rahmen (12) aus Kunststoff besteht.

13. Filtervorrichtung (10) nach Anspruch 12, **dadurch gekennzeichnet, dass** es sich bei dem Kunststoff des Rahmens (12) um Acrylnitril-Butadien-Styrol handelt.

14. Verwendung der Filtervorrichtung (10) nach einem der Ansprüche 1 bis 13, die darin besteht, den/die besagten durchtrennbaren Steg(e) (17) abzubrechen, indem die besagte Vorrichtung (10) in ihre im Gerät vorgesehene Aufnahme eingesetzt wird, wobei die besagte Aufnahme nicht eben ist.
